Europäisches Patentamt

European Patent Office

Office européen des brevets

(19)

(11) Publication number: **0 166 744 B1**

(12) # EUROPEAN PATENT SPECIFICATION

(45) Date of publication of patent specification: **11.12.91**     (51) Int. Cl.⁵: **H02K 27/20**, G01P 15/00

(21) Application number: **84904308.8**

(22) Date of filing: **19.11.84**

(86) International application number:
**PCT/US84/01885**

(87) International publication number:
**WO 85/02727 (20.06.85 85/14)**

(54) A PROGRAMMED MICROPROCESSOR FOR A SPEED CONTROL SYSTEM FOR A D.C. MOTOR.

(30) Priority: **15.12.83 US 561685**

(43) Date of publication of application:
**08.01.86 Bulletin  86/02**

(45) Publication of the grant of the patent:
**11.12.91 Bulletin  91/50**

(84) Designated Contracting States:
**BE DE FR GB**

(56) References cited:
**US-A- 3 599 063**
**US-A- 3 778 693**
**US-A- 4 090 116**
**US-A- 4 271 382**
**US-A- 4 413 212**

(73) Proprietor: **BAXTER INTERNATIONAL INC.**
**One Baxter Parkway**
**Deerfield, IL 60015(US)**

(72) Inventor: **KARPOWICZ, John, L.**
**5709 West Byron**
**Chicago, IL 60634(US)**
Inventor: **ZIELSDORF, Randall, A.**
**900 Orchard, 103**
**Mundelein, IL 60060(US)**

(74) Representative: **MacGregor, Gordon et al**
**ERIC POTTER & CLARKSON St. Mary's Court**
**St. Mary's Gate**
**Nottingham, NG1 1LE(GB)**

## Description

TECHNICAL FIELD

The present invention concerns a novel system for controlling the speed of a motor and, more particularly, a system in which a motor control circuit, which receives a feedback signal from the motor and sends a command voltage to the motor, is itself controlled in an iterative procedure that tracks the actual speed of the motor.

DC motors are usually controlled by a motor control circuit known as a motor controller. One conventional motor controller receives an input voltage from a preset reference source external of the motor, as an input command signal. The motor controller provides the necessary output command voltage to the motor. The DC motor may have an integral generator winding which acts as a tachometer. Based on how fast the motor is rotating, the generator winding supplies a voltage back to the controller as a direct feedback. The controller then compares the feedback voltage to the preset input command voltage and uses the output command voltage to adjust the motor speed until equal values of feedback voltage and preset input voltage are obtained, if possible.

It has been found that the motor speed control in the aforesaid system is often inaccurate and that speed drift can affect system performance.

It is, therefore, an object of the present invention to provide a system for controlling the motor speed more accurately than the basic system described above.

Another object of the present invention is to provide a system for controlling the speed of a motor, which is relatively simple in operation and easy to manufacture.

Background art includes US-A- 3778693, US-A- 4413212 and US-A- 4090116.

In US-A- 3778693, a system is provided for controlling the speed of a motor. The system includes a motor control circuit for providing a command voltage to the winding of the motor, with the motor control circuit having an input for receiving an input command from a source external of the motor.

A tachometer provides a feedback signal to the motor control circuit. Means are provided for sensing the actual speed of the motor shaft, the sensing means comprising a sensing device coupled directly adjacent the motor shaft.

Means are provided for receiving data representative of the actual motor speed and for calculating an input command based upon the received actual motor speed data. The input command is then transmitted to the motor control circuit input, whereby the command voltage from the motor control circuit is adjusted in response to variations in the input command.

The precharacterising part of claims 1 and 5 is based on the disclosure of US-A- 3 778 693 and the distinguishing features of the invention are set out in the characterising part of Claims 1 and 5.

A more detailed explanation of the invention is provided in the following description and claims, and is illustrated in the accompanying drawings.

BRIEF DESCRIPTION OF THE DRAWINGS

Figure 1 is a schematic block diagram of a system for controlling the speed of the motor, constructed in accordance with the principles of the present invention.

Figures 2A, 2B and 2C, when connected together, form a flow chart of a routine for achieving the system of the present invention.

DETAILED DESCRIPTION OF THE ILLUSTRATIVE EMBODIMENT

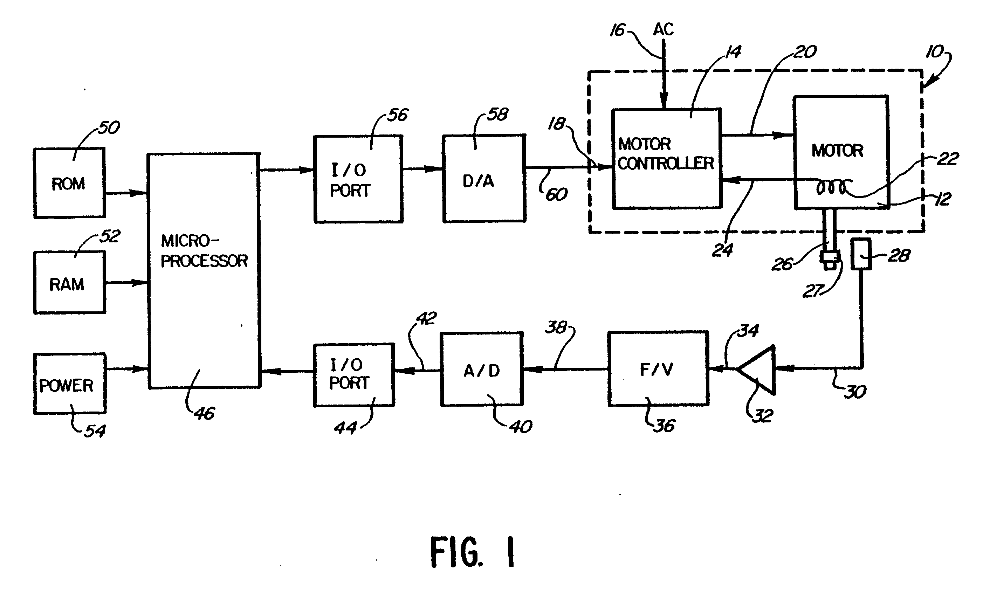

Referring to Figure 1, a conventional motor-motor controller set 10, comprising a DC motor 12 and a motor controller 14, is illustrated. As an illustrative example although no limitation is intended, motor-motor controller set 10 may comprise a Motomatic® drive system Series E-586 from Electro-Craft Corporation, 1600 Second Street South, Hopkins, Minnesota 55343. This Motomatic® drive system includes a permanent magnet DC motor-generator 12 and a solid state electronic controller 14.

As is well-known in the art, motor controller 14 is powered via AC line 16 and has a reference input 18 that is external from the motor, for receiving an input command voltage. Motor controller 14 provides an output command voltage on line 20 to the winding of DC motor 12, causing rotation of the motor's winding responsive to the output command voltage on line 20. Motor 12 has an integral generator winding 22, acting as a tachometer, for supplying a feedback voltage on line 24 back to controller 14. The feedback signal received by motor controller 14 is compared with the command signal at input 18 to provide the appropriate output command voltage on line 20. In typical prior art installations, a potentiometer or the like is used to set a fixed reference voltage at motor controller input 18 and the feedback voltage from the generator winding is compared with this reference voltage.

An additional control of the actual running speed of the motor is provided by effectively introducing a second feedback loop into the motor control system. In other words, the actual speed of the DC motor 12 is sensed and a revised input command voltage is provided to input 18 which is calculated based upon the received actual motor speed data.

To this end, the rotational speed of the motor shaft 26 is sensed by utilizing a ring magnet 27, attached to shaft 26, with the movement of the ring magnet 27 being sensed by Hall-effect sensor 28. Although a Hall-effect sensor has been described, it is understood that various types of rotational sensing devices could be utilized.

Sensor 28 generates pulses, the frequency of which are proportional to the speed of shaft 26. These pulses are fed via line 30 to a Schmitt trigger 32 which squares up the pulses and then they are fed via line 34 to frequency to voltage converter 36. Frequency to voltage converter 36 provides an analog voltage on line 38 that is proportional to the speed of rotation of motor shaft 26. This analog voltage is fed to analog to digital converter 40 which provides pulses on line 42 to the input/output port 44 of microprocessor 46.

In prior art practice, a system similar in basic structure to that described has been used for providing only an alarm signal for overspeed or underspeed of motor 12. However, in accordance with the present invention, this system is utilized to provide an input command voltage to input 18 of motor controller 14 for controlling the speed of motor 12 accurately.

A program is stored in ROM 50 for providing appropriate commands to microprocessor 46. Microprocessor 46 is coupled in the conventional manner to RAM 52 which is powered by power supply 54 which also powers microprocessor 46. The program in ROM 50 provides a routine which allows the microprocessor 46 to utilize the feedback control loop thereby providing an input command voltage that is transmitted in digital form from input/output port 56 of microprocessor 46. The digital input command voltage is fed through a digital to analog converter 58 which outputs the input command voltage, in analog form, on line 60 to input 18 of motor controller 14.

Although the routine provided by the microprocessor may be used at various intervals, in the illustrative embodiment the routine is used every 3.3 seconds. In accordance with the present invention, the new motor input command (Y) to be fed to input 18 is equal to A-(B-C)/K, wherein A is the previous input command that has been stored in RAM 52, B is the actual motor speed data that is fed to input/output port 44, C is the desired motor speed data and K is a damping adjustment factor (i.e., a constant that is empirically determined).

If a speed difference does not exist such that B (the actual motor speed) is equal to C (the desired motor speed), then no correction to the motor input command speed (A) results. Thus the new motor input command (Y) is equal to A, indicating that the motor is rotating at the desired command speed.

If a speed difference exists, such that the new measured speed value (B) does not equal the desired command speed (C), then a new input command speed (Y) is computed to adjust the motor speed closer to the desired command speed. Each time the routine is executed, the motor speed will be brought closer to the desired command speed (C). The input command value is thus modified to a value higher or lower than the desired command speed (C) to force the actual running speed (B) to equal the desired command speed (C).

As an example of this operation, assume that the desired command speed for motor 12 is 1,500 rpm. Therefore, the new motor input command is equal to $Y = A = C = 1,500$ to initiate motor operation. Now assume that the motor is running but that the feedback signal indicates that the actual running speed is 1,460 rpm, so that $B = 1,460$. With an empirically determined value of $K = 4$, a new input command speed(Y) will be calculated to be 1,510, whereby A is set equal to 1,510 for the next iteration. Microprocessor 46 will then send the new input command value of 1,510 to input 18 of motor controller 14, thereby incrementally increasing the actual running motor speed. After several iterations, the actual motor speed will approach the desired 1,500 rpm, even though the input command value at input 18 may be higher or lower than this value. In this manner, the input command to the motor controller input 18 is adjusted to compensate for motor and motor controller error.

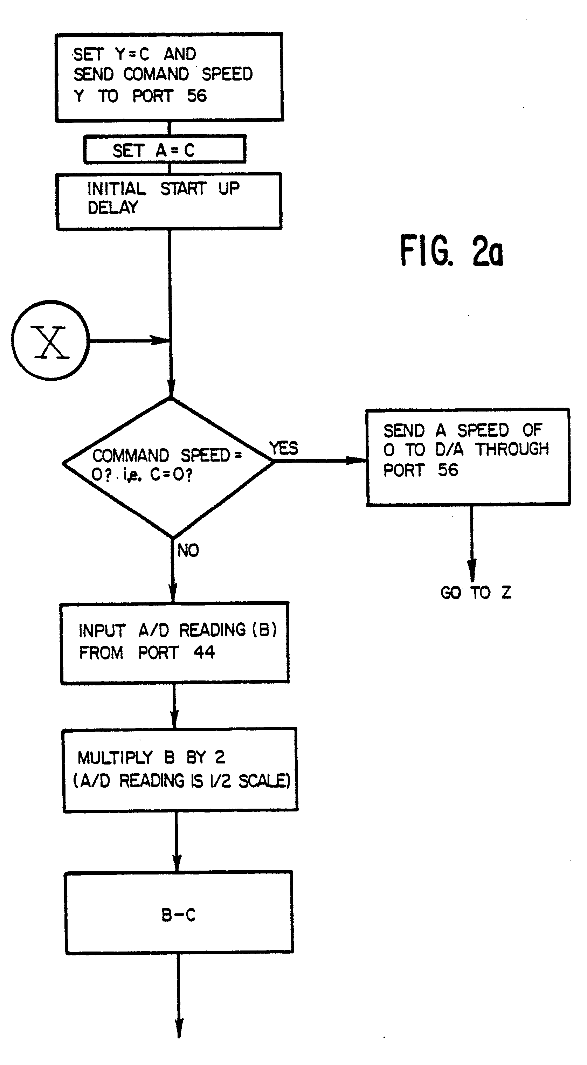

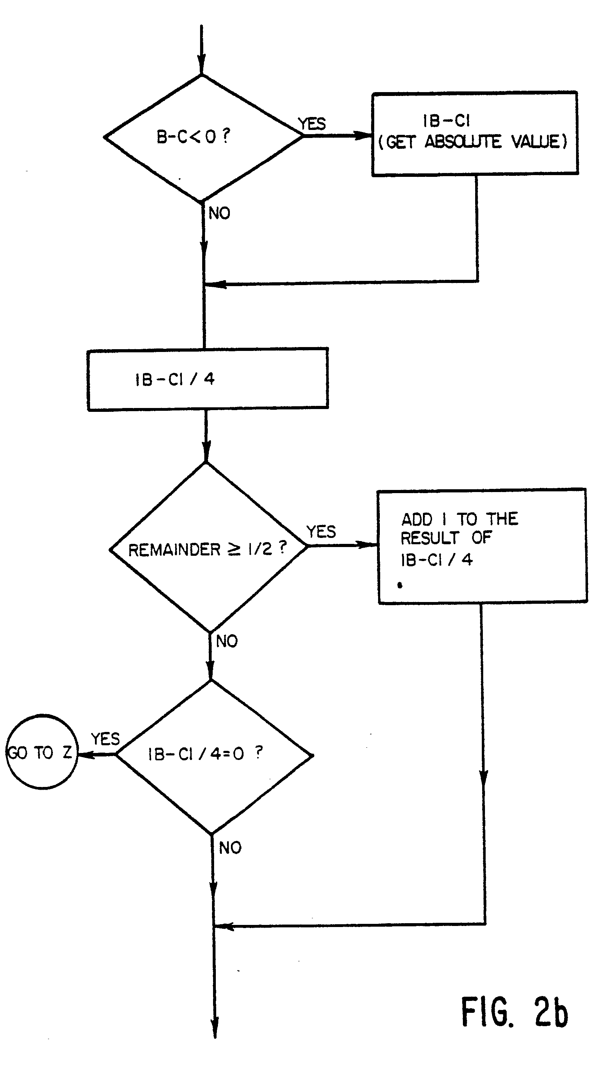

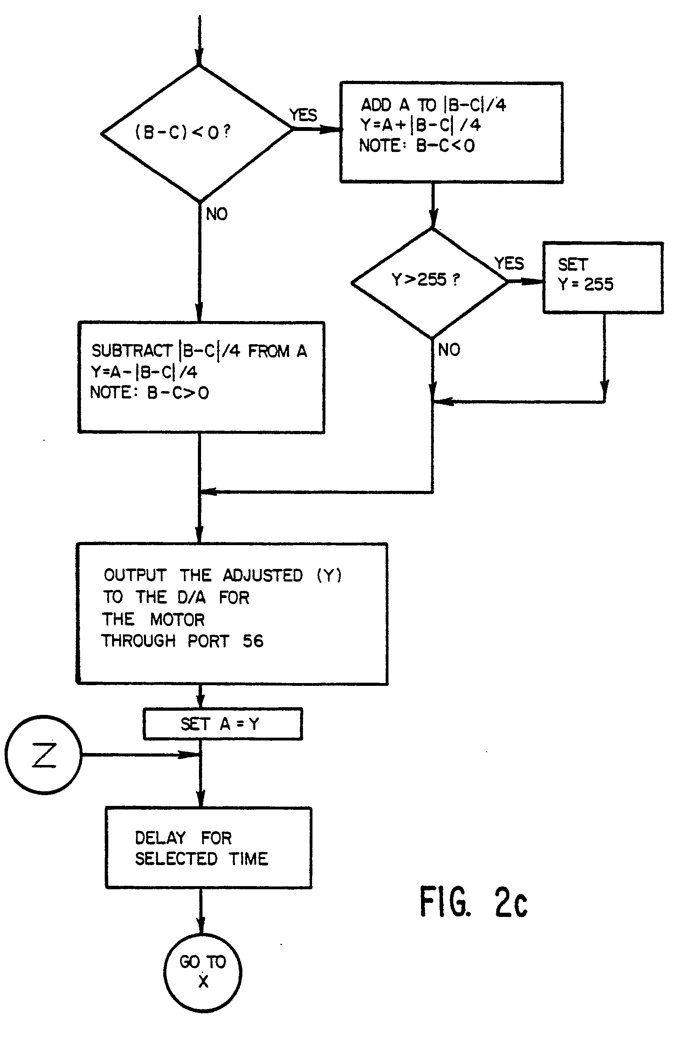

Referring now to Figures 2A-2C, a flow chart for the routine stored in ROM 50 is illustrated, with Y equal to the new motor input command, A equal to the previous motor input command stored in RAM 52, B equal to the actual motor speed value, C equal to the desired motor speed and K equal to the damping adjustment factor which is empirically determined in the illustrative embodiment as 4. In addition, $|B-C|$ is the absolute value of B-C.

It is seen by referring to the flow chart that initially the desired command speed C is sent from microprocessor 46 to port 56. There is first an initial start-up delay to allow the motor to run. It is determined whether the command speed C is zero. If it is zero, a speed of zero is sent to port 56 and the routine has ended. If the desired command speed C is not zero, the reading at the output of port 44 is fed to the microprocessor. This reading, which is the actual sensed speed B, is multiplied by two because in the illustrative embodiment the analog to digital converter is running at half scale. Then the desired speed C is subtracted from the actual speed B. If B-C is less than zero, the absolute value is obtained. The absolute value of B-C is divided by the constant K. If the remainder of this computation is equal to or greater than one-half, one is added to the result so it becomes rounded off upwards. If this computation equals zero, the routine is ended. If it does not equal zero, the new output to port 56 is obtained. If B-C is less than zero, the absolute value of B-C divided by 4 is added to A. On the other hand, if B-C is not less than zero, the absolute value of B-C divided by 4 is subtracted from A.

When the values are added, if the new motor input command speed (Y) is greater than 255, Y is set equal to 255 because in the illustrative embodiment an eight bit digital to analog converter 58 is used and there would be an overflow condition to converter 58 if the number were greater than 255. The adjusted speed (i.e., the new motor input command speed Y) is then fed to the digital to analog converter 58 via input/output port 56. It is then transmitted to input 18 of motor controller 14 to provide the new input command voltage for the motor controller.

## Claims

1. A system for controlling the speed of a motor (12), having a motor winding and a shaft (26), the system including:
   a motor control circuit (14) for providing a command voltage to the winding of the motor, said motor control circuit having an input (18) for receiving an input command from a source external of the motor (12);
   first means (22) for sensing a motor speed parameter and for providing a feedback signal to the motor control circuit (14);
   second means (28) for sensing the actual speed of the motor shaft to generate data representative of the actual speed of the motor;
   third means (46) for receiving said data and periodically producing an input command (Y) based on said data; and
   means (60) for transmitting said input command to said motor control circuit input (18), whereby said command voltage from said motor control circuit is adjusted in response to variations in said input command,
   characterised in that said third means comprises calculating means sequentially operable at the end of each of a continuous series of N selected time delay periods to calculate for an $M^{th}$ time period said input command Y ($M^{th}$) equal to A-(B-C)/K, wherein B is said data representative of the actual speed of the motor, C is desired motor speed data, K is a selected constant and wherein A is equal to the input command Y(m-1$^{th}$) used as the input command for the previous (M-1)$^{th}$ time period and including storing means for storing each calculated input command whereby each input command Ym is calculated from the difference between the last previously used input command Y(M-1) and the difference of the required (C) and actual (B) motor speed divided by a selected constant (K) to provide a selected adjustment at the end of each time period.

2. A system for controlling the speed of a motor 12 as claimed in claim 1 wherein the input command Ym$^{th}$ has a maximum value whereby for each delay period wherein said calculated value A-(B-c)/K exceeds the maximum value the input Ym$^{th}$ is set at the maximum value.

3. A system for controlling the speed of a motor 12 as claimed in claim 2 wherein said maximum value is 255.

4. A system as described in Claim 1, 2, or 3, wherein the storing means stores the calculated input command for a selected period of time, and said calculating means is operable at the end of said selected period of time to calculate a new input command.

5. A system according to Claim 1, 2, 3 or 4, wherein said third means (46) comprises a microprocessor having an input thereof coupled to said second sensing means (28) and an output thereof coupled through said transmitting means (60) to said motor control circuit input (18).

6. A system according to Claim 5, wherein said second sensing means (28) is coupled to the input of said microprocessor (46) through a frequency to voltage converter (36) and an analog to digital converter (40), and said motor control circuit (14) is coupled to the output of said microprocessor (46) through a digital to analog converter (58).

7. A method of controlling the speed of a motor used with a motor control circuit (14) which provides a command voltage to the motor winding, the motor control circuit (14) having an input (18) for receiving input commands From a source external of the motor, comprising the steps of:
   selecting a desired motor speed;
   sensing the actual speed of the motor;
   calculating at the end of each of a continuous series of N selected time delay periods an input command Y for the motor control circuit based upon data received that is representative of the actual motor speed, characterised by

storing each input command Ym, when it is calculated, for a selected $M^{th}$ period of time; and

calculating for the next time period $(M+1)$ a new input command $Yn+1$ by subtracting $(B-C)/K$ from the previously stored input command Ym, wherein B is the actual motor speed data, C is the selected desired speed data and K is a selected constant.

## Revendications

1. Système de régulation de la vitesse d'un moteur (12) comportant un enroulement de moteur et un axe, et comportant

un circuit (14) de commande du moteur fournissant une tension de commande à l'enroulement du moteur, ce circuit de commande du moteur ayant une entrée (18) pour recevoir la commande d'entrée fournie par une source externe au moteur (12);

un premier dispositif (22) capable de détecter un paramètre lié à la vitesse du moteur et de fournir un signal en retour au circuit (14) de commande du moteur;

un deuxième dispositif (28) capable de détecter la vitesse réelle de l'axe du moteur et de fournir des données représentatives de la vitesse réelle du moteur;

un troisième dispositif (46) capable de recevoir ces dernières données et de fournir périodiquement une commande d'entrée (Y) à l'entrée (18) basée sur ces mêmes données; et

un dispositif (60) permettant de transmettre cette commande d'entrée (Y) à l'entrée (18) du circuit de commande du moteur de façon à régler la dite tension de commande du dit circuit de commande du moteur en réponse aux variations de ladite commande d'entrée,

ce système étant caractérisé par le fait que le dit troisième dispositif comporte des moyens de calcul fonctionnant séquentiellement à la fin de chacun des intervalles de temps d'une série continue de N intervalles de temps préalablement choisis, pour calculer la dite commande d'entrée Y(Mème) correspondant au Mème intervalle de temps, égale à $A - (B - C)/K$, B étant ladite donnée représentative de la vitesse réelle du moteur, C est la vitesse du moteur désirée, et A étant égal à la commande d'entrée Y(m-1)-ème qui est utilisée comme commande d'entrée pour le (M-1)ème intervalle de temps précédent, et comporte également des moyens de stockage permettant de mettre en mémoire chacune des commandes d'entrée calculées de telle façon que chaque commande d'entrée Ym soit calculée à partir de la différence entre la dernière commande d'entrée utilisée Y(M-1) et la différence entre la vitesse (C) désirée du moteur et la vitesse réelle (B) du moteur divisée par une constante (K) choisie, de façon à obtenir, à la fin de chaque intervalle de temps, le réglage choisi.

2. Système de régulation de la vitesse d'un moteur (12) selon la revendication 1, dans lequel la commande d'entrée $Y^{ème}$ possède une valeur maximale, si bien que, pour chaque intervalle de temps dans ladite valeur calculée $A - (B - C)/K$ dépasse la valeur maximale, l'entrée $Y^{ème}$ prend la valeur maximale.

3. Système de régulation de la vitesse d'un moteur (12) selon la revendication 2, dans lequel ladite valeur maximale est égale à 255.

4. Système tel que décrit dans les revendications 1, 2 ou 3, dans lequel le moyen de stockage met en mémoire la commande d'entrée calculée pour l'intervalle de temps choisi, et dans lequel les dits moyens de calcul opèrent, à la fin de l'intervalle de temps choisi, pour calculer une nouvelle commande d'entrée.

5. Système selon les revendications 1, 2, 3 ou 4, dans lequel le dit troisième dispositif (46) comporte un microprocesseur possédant une entrée reliée au dit second dispositif de détection (28) et une sortie reliée, par l'intermédiaire du dit dispositif de transmission (60), à la dite entrée (18) du circuit de commande du moteur.

6. Système selon la revendication 5, dans lequel le dit second dispositif de détection (28) est relié à l'entrée du dit microprocesseur (46) par l'intermédiaire d'un convertisseur de fréquence en tension (36) et d'un convertisseur analogique-numérique (40), le dit circuit de commande du moteur (14) étant relié à la sortie du dit microprocesseur (46) par l'intermédiaire d'un convertisseur numérique-analogique (58).

7. Méthode de régulation de la vitesse d'un moteur utilisée avec un circuit (14) de commande du moteur fournissant une tension de commande à l'enroulement du moteur, le circuit de commande (14) du moteur possédant une entrée (18) destinée à recevoir les commandes d'entrée provenant d'une source extérieure au moteur, méthode comportant les étapes suivantes:

choix de la vitesse du moteur désirée;

détection de la vitesse réelle du moteur;

calcul, à la fin de chacun des intervalles de temps d'une série continue de N intervalles de temps préalablement choisis, d'une commande d'entrée Y destinée au circuit de commande du moteur, à partir des données représentatives de la vitesse réelle du moteur reçues,

méthode caractérisée par

la mise en mémoire de chaque commande d'entrée Ym, lorsqu'elle est calculée , pour le Même intervalle de temps choisi;

et le calcul, pour l'intervalle de temps (M + 1) suivant, d'une nouvelle commande d'entrée Ym + 1 obtenue en soustrayant (B - C)/K de la commande d'entrée Ym précédemment mise en mémoire, B étant la donnée correspondant à la vitesse réelle du moteur, C la donnée correspondant à la vitesse que l'on a choisi de donner au moteur, et K une constante prédéterminée.

**Patentansprüche**

1. System zum Steuern der Drehzahl eines Motors (12) mit einer Motorwicklung und einer Welle (26), das folgendes aufweist:

eine Motorsteuerschaltung (14), die an die Wicklung des Motors eine Befehlsspannung liefert und einen Eingang (18) zum Empfang eines Eingabebefehls von einer außerhalb des Motors (12) liegenden Quelle hat;

eine erste Einrichtung (22), die einen Motordrehzahlparameter erfaßt und an die Motorsteuerschaltung (14) ein Rückführungssignal liefert;

eine zweite Einrichtung (28), die die Ist-Drehzahl der Motorwelle erfaßt und eine der Ist-Drehzahl des Motors entsprechende Information erzeugt;

eine dritte Einrichtung (46), die die Information empfängt und auf der Grundlage dieser Information periodisch einen Eingabebefehl (Y) erzeugt; und

eine Einrichtung (60), die den Eingabebefehl an den Eingang (18) der Motorsteuerschaltung überträgt, wodurch die Befehlsspannung von der Motorsteuerschaltung nach Maßgabe von Änderungen im Eingabebefehl eingestellt wird,

dadurch gekennzeichnet, daß die dritte Einrichtung aufweist: eine Recheneinrichtung, die am Ende jeder einer fortlaufenden Serie von N ausgewählten Zeitverzögerungsperioden sequentiell aktivierbar ist, um für eine $M^{th}$-Periode den Eingabebefehl $Y(M^{th})$ gleich A-(B-C)/K zu berechnen, wobei B die der Ist-Drehzahl des Motors entsprechende Information, C Soll-Motordrehzahlinformation, K eine ausgewählte Konstante ist, und wobei A gleich dem Eingabebefehl $Y(m-1^{th})$, der als der Eingabebefehl für die vorhergehende $(M-1)^{th}$-Periode benutzt wurde,

sowie eine Speichereinrichtung, die jeden berechneten Eingabebefehl speichert, wodurch jeder Eingabebefehl Ym aus der Differenz zwischen dem letzten zuvor benutzten Eingabebefehl Y(M-1) und der Differenz zwischen der Soll-Motordrehzahl (C) und der Ist-Motordrehzahl (B), dividiert durch eine ausgewählte Konstante (K), berechnet wird, um am Ende einer jeden Periode eine ausgewählte Einstellung zu liefern.

2. System zum Steuern der Drehzahl eines Motors (12) nach Anspruch 1, wobei der Eingabebefehl $Ym^{th}$ einenMaximalwert hat, wodurch für jede Verzögerungsperiode, in der der berechnete Wert A-(B-C)/K den Maximalwert überschreitet, der Eingang $Ym^{th}$ auf den Maximalwert eingestellt wird.

3. System zum Steuern der Drehzahl eines Motors (12) nach Anspruch 2, wobei der Maximalwert 255 ist.

4. System nach Anspruch 1, 2 oder 3, wobei die Speichereinrichtung den berechneten Eingabebefehl für eine ausgewählte Periode speichert und die Recheneinrichtung am Ende der ausgewählten Periode aktivierbar ist, um einen neuen Eingabebefehl zu berechnen.

5. System nach Anspruch 1, 2, 3 oder 4, wobei die dritte Einrichtung (46) einen Mikroprozessor aufweist, von dem ein Eingang mit der sweiten Erfassungseinrichtung (20) und ein Ausgang über die Übertragungseinrichtung (60) mit dem Eingang (18) der Motorsteuerschaltung gekoppelt ist.

6. System nach Anspruch 5, wobei die zweite Erfassungseinrichtung (28) über einen Frequenz-Spannungs-Wandler (36) und einen Analog-Digital-Wandler (40) mit dem Eingang des Mikroprozessors (46) und die Motorsteuerschaltung (14) über einen Digital-Analog-Wandler (58) mit dem Ausgang des Mikroprozessors (46) gekoppelt ist.

7. Verfahren zum Steuern der Drehzahl eines Motors mit einer Motorsteuerschaltung (14), die an die Motorwicklung eine Befehlsspannung liefert und einen Eingang (18) zum Empfang von Eingabebefehlen von einer außerhalb des Motors liegenden Quelle hat, das folgende Schritte aufweist:

Auswählen einer Soll-Motordrehzahl;

Erfassen der Ist-Drehzahl des Motors;

Berechnen, am Ende jeder einer fortlaufenden Serie von N ausgewählten Zeitverzögerungsperioden, eines Eingabebefehls Y für die Motorsteuerschaltung auf der Grundlage von der Ist-Motordrehzahl entsprechender empfangener Information, gekennzeichnet durch

Speichern jedes Eingabebefehls Ym nach seiner Berechnung für eine ausgewählte M$^{th}$-Periode; und

Berechnen eines neuen Eingabebefehls Yn + 1 durch Subtraktion von (B-C)/K von dem zuvor gespeicherten Eingabebefehl Ym für die nächste Periode (M + 1), wobei B die Ist-Motordrehzahlinformation, C die ausgewählte Soll-Drehzahlinformation und K eine ausgewählte Konstante ist.

FIG. I

FIG. 2a

FIG. 2b

```
              ┌─────────────┐
              │             │
              ▼             │
         ◇─────────◇                  ┌─────────────────────┐
        ◇           ◇      YES         │ ADD A TO |B-C|/4    │
       ◇ (B-C) < 0 ? ◇──────────────▶ │ Y=A+|B-C|/4         │
        ◇           ◇                  │ NOTE: B-C<0         │
         ◇─────────◇                   └─────────────────────┘
              │                                  │
             NO                                  ▼
              │                           ◇─────────◇            ┌──────────┐
              │                          ◇           ◇    YES    │ SET      │
              │                         ◇  Y > 255 ?  ◇────────▶ │ Y = 255  │
              ▼                          ◇           ◇           └──────────┘
    ┌──────────────────────┐             ◇─────────◇                  │
    │ SUBTRACT |B-C|/4 FROM A│                │                       │
    │ Y=A-|B-C|/4           │               NO                        │
    │ NOTE: B-C>0           │                │                        │
    └──────────────────────┘                 │◀───────────────────────┘
              │                               │
              │◀──────────────────────────────┘
              ▼
    ┌──────────────────────┐
    │ OUTPUT THE ADJUSTED (Y)│
    │ TO THE D/A FOR        │
    │ THE MOTOR             │
    │ THROUGH PORT 56       │
    └──────────────────────┘
              │
              ▼
         ┌──────────┐
    ┌───▶│ SET A = Y │
    │    └──────────┘
  ( Z )       │
              ▼
    ┌──────────────────┐
    │ DELAY FOR        │
    │ SELECTED TIME    │
    └──────────────────┘
              │
              ▼
          ( GO TO
             X  )
```

FIG. 2c